# EUROPÄISCHE PATENTANMELDUNG

(11) **EP 1 059 768 A2**
(43) Veröffentlichungstag der Anmeldung: **13.12.2000**
(21) Anmeldenummer: 00112365.2
(22) Anmeldetag: 09.06.2000
(51) Int. Cl.: H04L 12/26, H04L 29/06

(54) **Lastgenerator für eine Vermittlungsanlage**

(30) Priorität: 10.06.1999 DE 19926433
(71) Anmelder: Tenovis GmbH & Co. KG, 60362 Frankfurt (DE)
(72) Erfinder: Rossler, Georg, 60489 Frankfurt (DE); Sauer, Klaus, 60488 Frankfurt (DE)
(74) Vertreter: Friedmann, Jürgen, Dr.-Ing.

(57) **Zusammenfassung**

Lastgenerator für eine Vermittlungsanlage. Die Vermittlungsanlage hat eine Mehrzahl von Systemschnittstellenschaltungen, die Daten von Leitungen oder Engeräten nach einem gegebenen Protokoll empfangen oder an diese senden, und eine Zentraleinheit, die mit den Systemschnittstellenschaltungen nach einem zweiten Protokoll kommuniziert. Der Lastgenerator hat eine Steuereinheit, die Lastereignisse erzeugt, und eine Generatorschnittstellenschaltung zum Übermitteln der Lastereignisse an die Vermittlungsanlage und ist dadurch gekennzeichnet, daß die Generatorschnittstellenschaltung (8) eingerichtet ist, um anstelle einer Systemschnittstellenschaltung in die Vermittlungsanlage eingesetzt zu werden und mit der Zentraleinheit (11) nach dem zweiten Protokoll zu kommunizieren.

Mit einer Generatorschnittstellenschaltung werden der Zentraleinheit mehrere Systemschnittstellenschaltungen vorgespiegelt.

## Beschreibung

### Stand der Technik

Die Erfindung betrifft einen Lastgenerator, der zur Überprüfung und/oder Optimierung der Leistungsfähigkeit einer Telekommunikations-Vermittlungsanlage eingesetzt wird, indem er Lastereignisse wie etwa Anrufe oder Anrufversuche von an die Vermittlungsanlage angeschlossenen Endgeräten oder Leitungen simuliert und die Reaktionen der Anlage auf solche Lastereignisse zu überwachen gestattet.

Eine solche Vermittlungsanlage umfaßt typischerweise eine Mehrzahl von Systemschnittstellenschaltungen, an die Endgeräte oder Leitungen anschließbar sind und die eingerichtet sind, um Daten von den Leitungen oder Endgeräten nach einem gegebenen Protokoll zu empfangen oder an diese zu senden, und eine Zentraleinheit, die mit den Systemschnittstellenschaltungen nach einem zweiten Protokoll kommuniziert, um Gesprächsverbindung zwischen verschiedenen Endgeräten und/oder Leitungen herzustellen.

Ein Lastgenerator für eine solche Vermittlungsanlage umfaßt eine Steuereinheit, die die Lastereignisse erzeugt, und eine Generatorschnittstellenschaltung, die die erzeugten Lastereignisse an die Vermittlungsanlage übermittelt und ihre Reaktion darauf zu erfassen gestattet.

Um die Belastbarkeit einer Vermittlungsanlage durch an verschiedenen Systemschnittstellenschaltungen eingehende Lastereignisse zu untersuchen, ist es herkömmlicherweise erforderlich, die von der Steuereinheit zentral erzeugten Lastereignisse auf eine Mehrzahl von Generatorschnittstellenschaltungen zu verteilen, die diese an die Systemschnittstellenschaltungen der Vermittlungsanlage weiterleiten, und die Antwortreaktionen, die die Vermittlungsanlage an die einzelnen durch den Lastgenerator simulierten Endgeräte oder Leitungen ausgibt, von den verschiedenen Generatorschnittstellenschaltungen zu sammeln und zentral weiterzuverarbeiten.

### Vorteile der Erfindung

Mit Hilfe der vorliegenden Erfindung werden die mit der Verteilung der Lastereignisse und der Zusammenführung der Reaktionen verbundenen Probleme vermieden, indem die Generatorschnittstellenschaltung so ausgebildet wird, daß sie, anstatt wie bisher mit einer Systemschnittstellenschaltung der Vermittlungsanlage zu kommunizieren, an der Stelle von dieser in die Vermittlungsanlage eingesetzt werden kann. Eine solche Generatorschnittstellenschaltung, die mit der Zentraleinheit der Vermittlungsanlage nach dem zweiten Protokoll kommuniziert, ist in der Lage, dieser Zentraleinheit das Vorhandensein einer Mehrzahl von Systemschnittstellenschaltungen vorzuspiegeln. Da aber diese Systemschnittstellenschaltungen für eine Untersuchung des Lastverhaltens der Vermittlungsanlage mit Hilfe des erfindungsgemäßen Lastgenerators nicht mehr benötigt werden, verringern sich der für eine solche Untersuchung erforderliche Material- sowie der Arbeitsaufwand erheblich.

Ein erfindungsgemäß strukturierter Lastgenerator ist besonders vorteilhaft einsetzbar in Verbindung mit Vermittlungsanlagen mit Busstruktur, bei der die einzelnen Systemschnittstellenschaltungen als Steckkarten an einem Bus ausgebildet sind. In einem solchen Fall ist die Generatorschnittstellenschaltung zweckmäßigerweise ebenfalls als Steckkarte aufgebaut, die mit den Schnittstellenschaltungen, die sie ersetzt, anschlußkompatibel ist.

In einer Vermittlungsanlage mit Busstruktur sind den Steckplätzen von Systemschnittstellenschaltung meist Hardware-Adressen zugeordnet, die von den Schaltungen auf den Bus übertragen werden, wenn sie ein von ihnen empfangenes Lastereignis an die Zentraleinheit übertragen. Bei dem erfindungsgemäßen Lastgenerator wird eine derartige Adresse zu jedem Lastereignis von der Steuereinheit festgelegt, und die Generatorschnittstellenschaltung überträgt diese Adresse zusammen mit dem Lastereignis an die Zentraleinheit, um ihr das Eintreffen von Lastereignissen von verschiedenen (in Wirklichkeit nicht vorhandenen) Systemschnittstellenschaltungen vorzuspiegeln. Anders als die Systemschnittstellenschaltungen verwendet die Generatorschnittstellenschaltung für die von ihr übertragenen Lastereignisse frei vorgebbare Adressen, und nicht etwa nur die Adresse, die dem Steckplatz am Bus der Vermittlungsanlage entspricht, an dem sie montiert ist. In umgekehrter Richtung ist die Generatorschnittstellenschaltung von der Zentraleinheit aus über eine Mehrzahl von Systemschnittstellenschaltungen-Adressen ansprechbar, so daß sie von der Zentraleinheit an diverse Adressen gesendete Antworten auf Lastereignisse empfangen und auswerten kann.

Die Systemschnittstellenschaltungen-Adressen, unter denen die Steuereinheit ansprechbar ist und die sie beim Übertragen von Lastereignissen an die Zentraleinheit verwendet, sind vorzugsweise durch die Steuereinheit programmierbar. So läßt sich die Zahl der von der Generatorschnittstellenschaltung simulierten Systemschnittstellenschaltungen dynamisch den Bedürfnissen des Testbetriebs anpassen, und es besteht insbesondere die Möglichkeit, diese Zahl während des Betriebs der Vermittlungsanlage zu ändern und so das Verhalten der Anlage in dem Fall zu simulieren, daß Systemschnittstellenschaltungen bei laufender Vermittlungsanlage ein- und ausgesteckt werden.

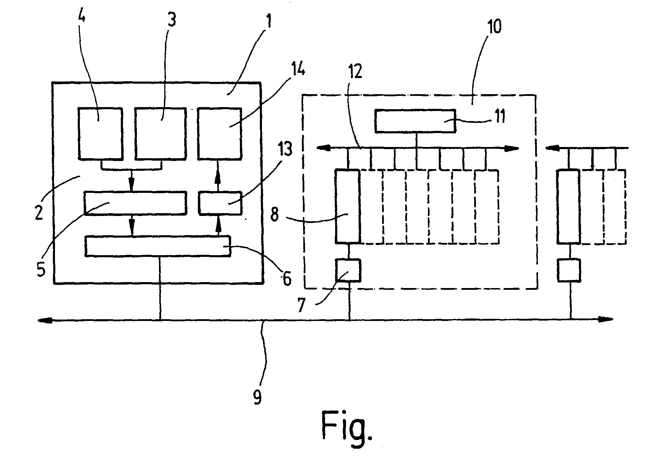

Weitere Merkmale und Vorteile der Erfindung ergeben sich aus der nachfolgenden Beschreibung eines Ausführungsbeispiels mit Bezug auf die Figur.

### Figur

Die einzige Figur zeigt ein Blockdiagramm eines erfindungsgemäßen Lastgenerators in Verbindung mit einer Vermittlungsanlage.

Der Lastgenerator umfaßt einen Computer, zum Beispiel einen Arbeitsplatzrechner 1, auf dem die Steuereinheit 2 des Lastgenerators in Gestalt verschiedener Software-Module implementiert ist. Die Steuereinheit umfaßt ein oder mehrere Teilnehmermodelle 3, die in Zusammenarbeit mit einem Laufzeitsystem 4 Lastereignisse, das heißt Anrufe von Teilnehmern, zu zufällig gewählten Zeitpunkten generiert. Das Teilnehmerverhalten wird dabei durch erweiterte endliche Automaten modelliert, die vorzugsweise in SDL (Functional Specification and Description Language) beschrieben werden. Das genaue Verhalten der Automaten kann der zu simulierenden Anwendungssituation der Vermittlungsanlage leicht angepaßt werden; es können unkorrelierte Anrufe, Partnergruppen, wiederholte Anrufe bei erfolglosem Vermittlungsversuch, Lastsprünge etc. simuliert werden.

Ein Protokollwandlermodul 5 setzt die simulierten Lastereignisse in Meldungen in demjenigen Protokollformat um, das innerhalb der zu testenden Vermittlungsanlage zwischen deren Systemschnittstellenschaltungen und Zentraleinheit eingesetzt wird. Dieses Protokoll ist zum Beispiel bei der digitalen Vermittlungsanlage I33 der Robert Bosch GmbH ein Protokoll der dritten Ebene des Iso-Schichtenmodells.

Die in diesem Protokoll formatierten Signalisierungsmeldungen, die den vom Teilnehmermodell simulierten Lastereignissen entsprechen, werden über eine LAN-Verbindung, zum Beispiel eine Ethernetverbindung mit entsprechenden Schnittstellen 6,7 an eine Generatorschnittstellenschaltung 8 weitergeleitet.

Die zu testende Vermittlungsanlage 15, zum Beispiel vom erwähnten Typ I33, umfaßt mehrere Module 10 mit jeweils eigener Zentraleinheit 11, die über einen Bus, den sogenannten CBus 12, mit einer Mehrzahl von Systemschnittstellenschaltungen kommuniziert, an die jeweils eine Mehrzahl von Leitungen oder Endgeräten angeschlossen sein kann. Die Systemschnittstellenschaltungen sind üblicherweise in Steckplätzen am CBus 12 montiert, und jedem Steckplatz ist eine Hardware-Adresse im Bereich von 0 bis 127 zugeordnet, über die die am Steckplatz montierte Systemschnittstellenschaltung durch die Zentraleinheit 11 ansprechbar ist, und die die Systemschnittstellenschaltung zu Signalisierungsmeldungen hinzufügt, die sie auf den CBus 12 ausgibt. Die Hardware-Adressen sind für jeden Steckplatz der Vermittlungsanlage 15 eindeutig definiert.

Um die Vermittlungsanlage mit dem erfindungsgemäßen Lastgenerator zu testen, müssen die Steckplätze nicht mit Systemschnittstellenschaltungen bestückt sein. Es genügt, daß sich eine Generatorschnittstellenschaltung 8 in einem Steckplatz befindet. Diese leitet von der Steuereinheit 2 erzeugte Lastereignisse jeweils mit einer zugehörigen, ebenfalls von der Steuereinheit 2 festgelegten HardwareAdresse über den CBus 12 an die Zentraleinheit 11 weiter und spielt ihr so das Eintreffen von Anrufen auf einer Vielzahl von nur virtuell vorhandenen Systemschnittstellenschaltungen vor. Gleichzeitig ist eine Vielzahl von Hardware-Adressen in der Generatorschnittstellenschaltung 8 durch die Steuereinheit 2 programmierbar, unter denen die Generatorschnittstellenschaltung 8 von der Zentraleinheit 11 ansprechbar ist. Auf diese Weise empfängt die Generatorschnittstellenschaltung 8 von der Zentraleinheit 11 in Reaktion auf die Lastereignisse ausgegebene Signalisierungsinformation und liefert diese über die LAN-Verbindung zurück an die Steuereinheit 2, die in einem Auswertungsmodul 14 eine statistische Auswertung der durch einen zweiten Protokollwandler 13 aus den übertragenen Datenpaketen extrahierten Informationen vornimmt.

Eine Steuereinheit 2 kann mit mehreren Generatorschnittstellenschaltungen 8 kommunizieren und somit mehrere Module 10 zugleich testen.

Außer Signalisierungsinformationen, mit denen von der Steuereinheit 2 simulierte Lastereignisse an die Zentraleinheit 11 der Vermittlungsanlage gemeldet werden, werden auf der LAN-Verbindung 9 auch Verwaltungsinformationen übertragen, die der Konfigurierung der Generatorschnittstellenschaltung 8 durch die Steuereinheit 2 dienen.

Zum Beispiel kann die Steuereinheit 2 an die Generatorschnittstellenschaltung 8 einen Befehl zum Einrichten einer virtuellen Systemschnittstellenschaltung richten. Dieser Befehl spezifiziert die Hardware-Adresse, unter der die virtuelle Systemschnittstellenschaltung Lastereignisse an die Zentraleinheit 11 übertragen soll und unter der sie von der Zentraleinheit ansprechbar ist, den Typ der zu simulierenden Systemschnittstelle (einzelne Schnittstellen können sich in der Anzahl ihrer Ports, ihrer Übertragungskapazität oder anderen Eigenschaften unterscheiden), sowie Eigenschaften von Ports. Wenn der Befehl eine Hardware-Adresse spezifiziert, unter der die Generatorschnittstellenschaltung noch keine virtuelle Schnittstelle eingerichtet hat, so richtet sie eine neue ein. Wenn eine virtuelle Schnittstelle mit der betreffenden Hardwareadresse bereits existiert, so verändert sie deren Eigenschaften, indem sie die mit dem Befehl spezifizierten Eigenschaften übernimmt. Die erfolgreiche oder nicht erfolgreiche Einrichtung einer virtuellen Schnittstelle wird an die Steuereinheit 2 zurückgemeldet.

Weitere Befehle können zum Abfragen der Eigenschaften jeder einzelnen virtuellen Schnittstelle der Generatorschnittstellenschaltung durch die Steuereinheit 2 dienen.

Wenn die Generatorschnittstellenschaltung einen Befehl zum Einrichten einer virtuellen Schnittstelle empfangen und ausgeführt hat, kann es - je nach Bauart der zu testenden Vermittlungsanlage - erforderlich sein, dieses Ereignis der Zentraleinheit der Vermittlungsanlage zu melden. Im Rahmen des hier betrachteten Beispiels eines Lastgenerators für die Vermittlungsanlage I33 ist dies nicht erforderlich.

Es genügt, wenn diese Adressen der Generatorschnittstellenschaltung 8 übermittelt werden. Die Zentraleinheit 11 führt in regelmäßigen Zeitabständen eine Abfrageroutine aus, in deren Verlauf sie sämtliche Steckplätze am CBus, an denen sich Schnittstellenschaltungen befinden oder befinden könnten, adressiert und eine Rückmeldung von diesen anfordert. Wenn eine Rückmeldung Von einem bislang unbelegten Steckplatz ausbleibt, erkennt die Zentraleinheit 11, daß sich an dem Steckplatz nach wie vor keine Schnittstellenschaltung befindet. Wenn eine Antwort eintrifft, erkennt die Zentraleinheit 11, daß zwischen der vorherigen und der gegenwärtigen Abfrage am entsprechenden Steckplatz eine Schaltung eingesteckt worden ist. Daraufhin versorgt die Zentraleinheit 11 die Schnittstellenschaltung mit Konfigurationsdaten und nimmt in der Folge auch von diesem Steckplatz Verbindungsanforderungen entgegen oder stellt Verbindungen von anderen Anrufern zu dieser her.

Umgekehrt ist die Zentraleinheit 11 auch in der Lage, ihr Verhalten vollautomatisch anzupassen, wenn an einem Steckplatz eine Systemschnittstellenschaltung entfernt worden ist. Wenn nämlich im Laufe der Abfrageroutine eine Rückmeldung von einem Steckplatz ausbleibt, der bei früheren Abfragen Rückmeldungen geliefert hat, so erkennt die Zentraleinheit 11, daß die entsprechende Schnittstellenschaltung entfernt worden oder ausgefallen ist, und nimmt keine Verbindungsanforderungen mehr entgegen, die ihr unter der Adresse der entsprechenden Schnittstellenschaltung übertragen werden, und stellt auch keine Verbindungen zu dieser Schnittstellenschaltung mehr her.

Auch die Fähigkeit einer Vermittlungsanlage wie der Anlage I33, mit Veränderungen in der Anlagenkonfiguration wie etwa durch Entfernen oder Hinzufügen von Schnittstellenschaltungen im Laufe des Betriebs umzugehen, kann mit dem erfindungsgemäßen Lastgenerator auf bequeme Weise getestet werden, indem im Laufe eines Lastversuchs virtuelle Schnittstellenschaltungen eingerichtet oder aufgehoben werden.

## Patentansprüche

1. Lastgenerator für eine Vermittlungsanlage (15), wobei die Vermittlungsanlage eine Mehrzahl von Systemschnittstellenschaltungen, an die Endgeräte oder Leitungen anschließbar sind, und die eingerichtet sind, um Daten von den Leitungen oder Endgeräten nach einem gegebenen Protokoll zu empfangen oder an diese zu senden, und eine Zentraleinheit (11) umfaßt, die mit den Systemschnittstellenschaltungen nach einem zweiten Protokoll kommuniziert, wobei der Lastgenerator eine Steuereinheit (2), die Lastereignisse erzeugt, und wenigstens eine Generatorschnittstellenschaltung (8) zum Übermitteln der Lastereignisse an die Vermittlungsanlage umfaßt, **dadurch gekennzeichnet,** daß die Generatorschnittstellenschaltung (8) eingerichtet ist, um anstelle einer Systemschnittstellenschaltung in die Vermittlungsanlage eingesetzt zu werden und mit der Zentraleinheit (11) nach dem zweiten Protokoll zu kommunizieren.

2. Lastgenerator nach Anspruch 1, **dadurch gekennzeichnet,** daß die Generatorschnittstellenschaltung (8) eine mit den Systemschnittstellenschaltungen anschlußkompatible Steckkarte ist.

3. Lastgenerator nach Anspruch 1 oder 2, **dadurch gekennzeichnet,** daß die Generatorschnittstellenschaltung (8) eingerichtet ist, um der Zentraleinheit (11) das Vorhandensein einer Mehrzahl von Systemschnittstellenschaltungen vorzuspiegeln.

4. Lastgenerator nach Anspruch 3, **dadurch gekennzeichnet,** daß die Generatorschnittstellenschaltung (8) mit der Zentraleinheit (11) über eine Busleitung (12) der Vermittlungsanlage kommuniziert, und daß die Generatorschnittstellenschaltung (8) über eine Mehrzahl von Systemschnittstellenschaltungenadressen durch die Zentraleinheit (11) ansprechbar ist.

5. Lastgenerator nach Anspruch 4, **dadurch gekennzeichnet,** daß die Systemschnittstellenadressen mit Hilfe der Steuereinheit (2) programmierbar sind.

6. Lastgenerator nach einem der Ansprüche 3 bis 5, **dadurch gekennzeichnet,** daß die Steuereinheit (2) zu jedem Lastereignis eine Systemschnittstellenadresse festlegt und die Generatorschnittstellenschaltung (8) diese Adresse zusammen mit dem Lastereignis an die Zentraleinheit (11) übermittelt.

7. Lastgenerator nach einem der vorhergehenden Ansprüche, **dadurch gekennzeichnet,** daß die Steuereinheit (2) auf einem Arbeitsplatzrechner (1) implementiert ist und mit der Generatorschnittstellenschaltung (8) über eine LAN-Verbindung (9) kommuniziert.

8. Lastgenerator nach einem der vorhergehenden Ansprüche für eine modulare Vermittlungsanlage (15), deren Module (10) jeweils eine Mehrzahl von Systemschnittstellenschaltungen und eine Zentraleinheit (11) umfassen, **dadurch gekennzeichnet,** daß er eine Mehrzahl von Generatorschnittstellenschaltungen zum Einsetzen in jeweils ein Modul (10) der Vermittlungsanlage und zum gleichzeitigen Testen aller Module (10) umfaßt.
